# EUROPEAN PATENT APPLICATION

(11) **EP 2 455 921 A1**
(43) Date of publication of application: **23.05.2012**
(21) Application number: 10306200.6
(22) Date of filing: 03.11.2010
(51) Int. Cl.: G07F 7/00, G07C 9/00

(54) **A system for accessing a service and corresponding portable device and method**

(71) Applicant: Gemalto SA, 92190 Meudon (FR)
(72) Inventor: RheIimi, Alain, 13600, La Ciotat (FR)

(57) **Abstract**

The invention relates to a system (10) for accessing a service,

According to the invention, the system comprises two contact-less readers and one portable device (14). A first contact-less reader (12) is adapted to send, through a first range radiofrequency link, to the portable device, a first message (22) comprising data. And the portable device is adapted to send, through a second range radiofrequency link, to a second contact-less reader (16) a second message (24) using data received from the first message.

The invention also relates to corresponding portable device and method.

## Description

### Field of the invention:

The invention relates, in a general manner, to a system for accessing a service.

Furthermore, the invention also pertains to a portable device for accessing a service.

Within the present description, a portable device or a token is an electronic object that is intended to communicate with the outside world.

Finally, the invention relates to a method for accessing a service.

### State of the art:

A known solution for accessing a service is based upon a use of a portable device, such as a contact-less card, that exchanges data with a contact-less reader while using a short range radiofrequency link.

Once a user of the contact-less card is sufficiently close to the contact-less reader, the contact-less reader requests to the card to execute a command. The contact-less card executes the command, so as to access a service, like an access to a public transport for the card user.

However, such a known solution does not allow anticipating a presence of a user of a service. As a matter of fact, the portable device user is identified when she or he is close to the contact-less reader.

Thus, there is a need to anticipate a presence of a user of a service accessible through a contact-less technology.

### Summary of the invention:

The invention proposes a solution for satisfying the just hereinabove specified need by providing a system for accessing a service.

According to the invention, the system comprises two contact-less readers and one portable device. A first contact-less reader is adapted to send, through a first range radiofrequency link, to the portable device, a first message comprising data. The portable device is adapted to send, through a second range radiofrequency link, to a second contact-less reader a second message using data received from the first message.

The principle of the invention consists in a system including a token and two contact-less readers that exchange data via the token through two radiofrequency channels. More exactly, the token receives from a first contact-less reader a first message with data and sends to a second contact-less reader a second message with data that depends on data received within the first message.

The invention system allows sharing data between the first contact-less reader, the token and the second contact-less reader.

The token is an intermediary entity between the contact-less readers. The token forwards data originating from the first contact-less reader to the second contact-less reader.

The second contact-less reader recognizes a presence of a token that has previously exchanged data with the first contact-less reader.

Contrary to the known solution that is described supra, due to a location of the presence of the token by the first contact-less reader, the invention allows anticipating an access to a service managed by the second contact-less reader.

The token user may thus access a service based upon data originating from the first contact-less reader and intended to the second contact-less reader.

The token user does not need to be involved apart from carrying the token. The invention is therefore convenient for the user.

Preferably, the data comprises a user identifier and a key for encrypting data to be included within the second message.

The encryption of the data exchanged between the token and the second contact-less reader is therefore secure for the token user and the system.

According to a further aspect, the invention is a portable device for accessing a service.

According to the invention, the portable device is adapted to receive, through a first range radiofrequency link, a first message comprising data and send, through a second range radiofrequency link, a second message using data received from the first message.

The portable device may be a terminal or a token.

The portable device may cooperate with a host device, such as a mobile telephone, a Personal Digital Assistant (or PDA), a smart phone, and/or a portable computer.

The token may have different form factors. The token may be a smart card (i.e. a card with data processing means) or a chip fixed, in a removable manner, to a host device. The token may be an embedded Secure Element, as a chip that is soldered on a Printed Circuit Board (or PCB) of a host device, like a Trusted Platform Module (or TPM), a Mobile Trusted Module (or MTM) or a Near Field Chip Secure Element.

According to still another aspect, the invention is a method for accessing a service.

According to the invention, the method comprises the following steps. A first contact-less reader sends, through a first range radiofrequency link, to a portable device, a first message comprising data. And the portable device sends, through a second range radiofrequency link, to a second contact-less reader a second message using data received from the first message.

### Brief description of the drawings:

Additional features and advantages of the invention will be more clearly understandable after reading a detailed description of one preferred embodiment of the invention, given as one indicative and non-limitative example, in conjunction with the following drawings:

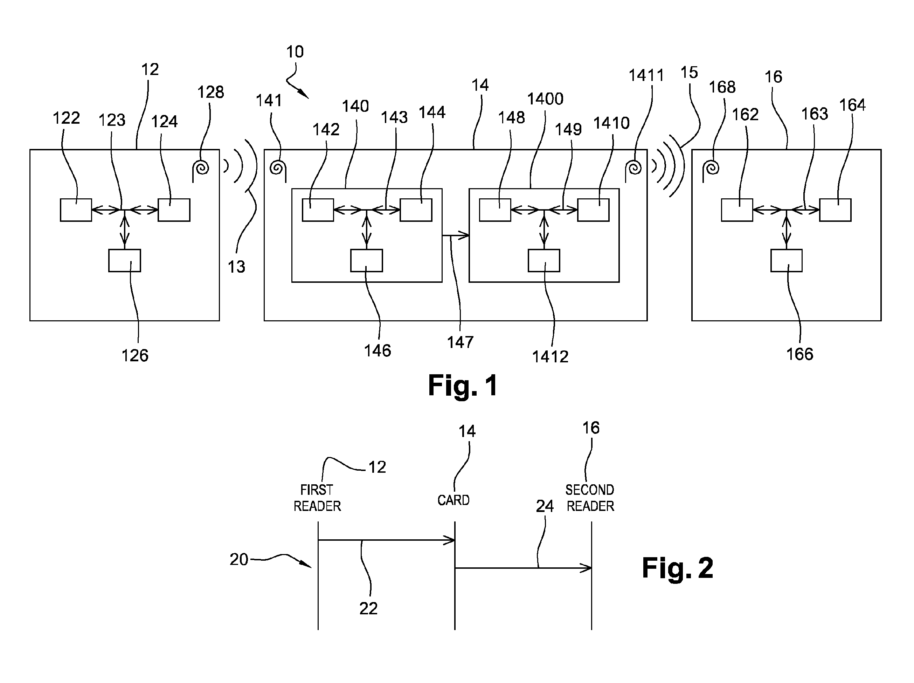

- Figure 1 illustrates a simplified diagram of one exemplary embodiment of a system comprising a first and a second contact-less reader and a card, as token, the system being adapted to let the token capture data originating from the first contact-less reader and communicate the captured data to the second contact-less reader, according to the invention; and
- Figure 2 represents an example of a flow of messages exchanged between the first and second contact-less readers and the token of the system of figure 1, so that the token user accesses a service provided by the second contact-less reader.

### Detailed description:

Herein under is considered a card, as an invention portable device for accessing a service.

Instead of being constituted by a token, the portable device may be constituted, for example, by a mobile handset, a mobile telephone, a smart phone, a PDA, a Portable Computer (or PC), a mobile TV (acronym for TeleVision) set, a tablet computer, a media player, a Global Positioning System (or GPS) receiver, a netbook and/or any other device able to retrieve data from a first contact-less reader and send data to a second contact-less reader.

Naturally, the herein below described embodiment is only for exemplifying purposes and is not considered to reduce the scope of the present invention.

Figure 1 shows schematically a system 10 that includes a first contact-less reader 12, a card 14 and a second contact-less reader 16.

Within the present description, the adjective "contact-less" used within the expression "contact-less reader" means notably that the reader communicates with an external device via a short range radio-frequency link by using, for example, International Organization Standardization / International Electrotechnical Commission (or ISO/IEC) 14 443 specifications, a Ultra High Frequency RadioFrequency IDentification (or UHF RFID) technology or the like.

For a sake of clarity and conciseness, the first contact-less reader 12 and the second contact-less reader 16 are termed hereinafter the first reader 12 and the second reader 16.

The first reader 12 and the second reader 16 are situated in different locations. The first reader 12 and the second reader 16 may be located in one and the same geographical area, like a shop, a street, a hospital hall, a station hall, an airport hall, or a bank office.

The first reader 12 is powered either while being connected to an external electrical network or with a battery, as an internal component.

The first reader 12 is connected possibly through a communication network, such as an Intranet or Internet network, to a PC (not represented) or a server, as a controller of the first reader 12.

The first reader 12 is equipped with an antenna 128. The antenna 128 is configured to communicate, through a first range radiofrequency link 13, data with an external device, such as the card 14.

The first range radiofrequency is fixed at, for example, 13.56 MHz.

A corresponding distance separating the first reader 12 from the card 14 is typically up to some tens of centimetres.

The first contact-less communication between the first reader 12 and the card 14, as a first communication channel, is, for example, compatible with the ISO 14 443 standard.

The first reader 12 includes one microprocessor(s) 122, as means for processing data, at least a non-volatile memory 124, like a Read Only Memory (or ROM), as means for storing data, and an Input/Output (or I/O) interface(s) 126 interconnected through an internal control and data bus 123.

The memory 124 stores data to be transmitted to the card 14, as external addressee of the data.

As data, there is preferably a User IDentifier (or UID) or any other identifier allocated to the card 14. The data includes preferentially a key, denoted Ks, for encrypting data to be included within a second message to be sent by the card 14 to the second reader 16. The UID and preferably the key Ks are previously shared by the first reader 12 and the second reader 16. For example, the PC or the server, to which the first and second readers 12 and 16 are both connected, supplies the UID and preferably its associated key Ks to the first and second readers 12 and 16.

The first reader 12 may be able to exchange data with the card 14 in a secure manner. To exchange in a secure manner, the first reader 12 and the card 14 share and store, for example, a key for encrypting/decrypting data and an algorithm for encrypting/decrypting data used before sending data to or after receiving data from the other device. The first reader 12 may obtain the key for encrypting/decrypting data and the algorithm for encrypting/decrypting data from the PC and/or an external server (not represented). As to the card 14, the card 14 may be pre-loaded with the key for encrypting/decrypting data and the algorithm for encrypting/decrypting data, such as a Data Encryption Standard (or DES) or a triple DES. Such a pre-loading may occur, for example, either during a manufacturing of the card 14 before its issuing or after its issuing from a server when a card user requests to access a service managed through or by at least the second reader 16.

The first reader 12 is arranged to send, through the first range radiofrequency link 13, to the card 14, a first message containing data.

The card 14, as token, is an electronic portable device.

As token, it comprises means for storing data and means for sending to and/or receiving data from outside through an I/O interface with a contact-less communicating device. The token is any electronic medium that may have different form factors. For example, the token can be embodied within a Secure Digital (or SD) type card, a Multi-Media (or MMC) type Card, a dongle of the USB (acronym for "Universal Serial Bus") type or a chip to be fixed to a user terminal, as host device, possibly in a removable manner. The token may further comprise one or several microprocessors, as means for processing data.

According to a preferred embodiment, as described herein infra, the card 14 is used as a standalone entity.

According to another embodiment (not represented), the card cooperates with a host terminal that carries an external element with or incorporates one or two antennas allowing to communicate with the two external readers 12 and 16.

The card 14 is adapted to come in between the first reader 12 and the second reader 16, so as to capture data originating from the first reader 12 and supply the captured data to the second reader 16.

The card 14 includes a first chip 140 and a second chip 1400.

Card 14 microprocessor(s) execute(s) preferably security functions, in order to protect an access to information managed through or by the card 14. Among others, the security functions allow to identify a user of the card 14 and/or encrypt data to be sent, in order to be read only by an external device that shares with the card 14 a key enabling to decrypt the sent encrypted data (and thus obtain clear data).

The security functions include preferably a user authentication process to be used before accessing the card 14. To authenticate the user, the card 14 may store an application for verifying a Personal Identity Number (or PIN) securely stored by the card 14 and to be input by the card 14 user, so as to compare the input data with the stored PIN, so as to authorize a running of the application algorithm.

The security functions include preferentially an encryption/decryption process to be used before sending, to an external device, data, as command, and/or after receiving from the external device, data, as response to the sent command, so as to protect an access to the data exchanged between the card 14 and the external device.

The card 14 stores, preferably within a non-volatile part of its memory, an application algorithm relating to a process, according to the invention, for accessing a service through the card 14.

The first chip 140 includes preferably at least one microprocessor 142, as means for processing data, at least one memory 144, as means for storing data, and at least one I/O interface 146, which are internally linked all together through a control and data bus 143.

The card 14 may comprise a battery, so as to power at least one of the first and second chips 140 and 1400.

The first chip 140 is preferably powered through a short range radiofrequency signal emitted by the first reader 12.

The first chip 140 operates preferably in a card emulation mode, i.e. the first chip 140 is a slave while the first reader 12 is a master.

The first chip 140 is connected to a first antenna 141. The first antenna 141 is preferably carried by the card 14 body.

The first chip 140 is able to demodulate (and preferably modulate) a short range radio-frequency signal received, through the first range radiofrequency link 13, from the first reader 12, so as to retrieve data sent by the first reader 12.

The first chip 140 is arranged to receive, through the first range radiofrequency link 13, data originating from the first reader 12.

The first chip 140 is arranged to store, at least in a temporary manner, the data received from the first reader 12, such as the UID and preferentially the key Ks.

The first chip 140 is connected, through at least one wire 147, such as a Single Wire Protocol (or SWP) or an Inter Integrated Circuit (or I²C), to the second chip 1400. The wire 147 is at least unidirectional. The first chip 140 is able to communicate data to the second chip 1400.

Alternately, instead of a wire as a contact link, a coupling between the first and second chips 140 and 1400 consists of a contact-less link.

The first chip 140 is arranged to send to the second chip 1400 data, notably at least some data received from the first reader 12, such as in particular the UID and preferably its associated Ks.

The second chip 1400 is preferably powered through the first chip 140 via at least one wire.

Alternatively, the second chip 1400 is powered through a second range radiofrequency signal emitted by the second reader 16.

Once the first chip 140 has sent to the second chip 1400 data, such as the allocated UID and preferably its associated key Ks, firstly, the powering of the first chip 140 is preferably switched off, and then, the powering of the second chip 1400 is preferably switched on. Only one chip is powered at one time and is able to operate.

According to an important feature of the invention, the second chip 1400 is adapted to send, through a second range radiofrequency link 15, to the second reader 16, another message, termed second message, depending notably on data received from the first message.

The second message encompasses data received within the first message, such as the allocated UID, and uses data received within the first message, like its associated key Ks.

The second range radiofrequency is preferably different from the first range radiofrequency.

According to an alternative (not represented), the first and second range radiofrequencies are one and the same radiofrequency.

The second range radiofrequency is set, for example, at 915 MHz, i.e. higher than the first range radiofrequency.

Alternately, the first range radiofrequency is higher than the second range radiofrequency.

A corresponding distance separating the card 14 from the second reader 16 is typically up to a ten of metres.

The second contact-less communication between the card 14 and the second reader 16, as a second communication channel, is, for example, compatible with the UHF RFID technology.

The second chip 1400 is connected to a second antenna 1411. The second antenna 1411 is preferably carried by the card 14 body.

The second chip 1400 is preferably used in a contact-less card emulation mode or a transponder mode, so as to wait for data originating from the second reader 16 before providing this latter with data depending on data received from the first reader 12.

Alternately, the second chip 1400 is used in a reader mode, so as to let communicate the card 14 and an external contact-less communicating device while powering it, at least in part. In a reader mode, the second chip 1400 is powered either directly or indirectly (i.e. through the first chip 140) by a battery housed within the card 14 and transmits, through the second antenna 1411, a signal with sufficient power, so as to also power the external device. Thus, the second chip 1400 is able to transmit to the external device the second message at its own initiative.

The second chip 1400 includes preferably at least one microprocessor 148, as means for processing data.

The second chip 1400 includes at least one memory 1410, as means for storing data, and at least one I/O interface 1412, which are internally linked all together through a control and data bus 149.

The memory 1410 may include a non-volatile memory, such as a flash memory, and/or a volatile memory, such as a Random Access Memory (or RAM).

The memory 1410 may comprise a temporary memory for storing the data to be sent, such as the UID and preferably the associated key Ks. Such a temporary memory erases, for example, after some hours or days, its content (due to data leakage) when the second chip 1400 is no more powered. A choice of the used temporary memory ensures that a tracking outside of an area covered by the second reader 16 is no more efficient.

The second chip 1400 is able to modulate (and preferably demodulate) a second range radio-frequency signal to be sent (and preferably to be received), through the second range radiofrequency link 15, to (and from) the second reader 16.

The second chip 1400 stores a data integrity algorithm, such as a checksum, a Hash sum or a Cyclic Redundancy Check (or CRC) function. A result of the data integrity algorithm using data, as an entry, is a fixed-length binary sequence, such as a CRC code with a 8, 16 or 32 bit length.

Another device, such as the second reader 16 or the PC (or the server) connected to the second reader 16, is thus able to analyse whether the concerned data and a result of the data integrity algorithm do or do not match the expected result, such as a CRC code.

The second chip 1400 stores preferably a random generation algorithm, so as to generate a random number.

The second chip 1400 stores preferably an encryption algorithm for encrypting data, such as a DES or a triple DES, that uses, on the one hand, data to be encrypted, as one entry, and on the other hand, a key, as another entry, such as the key Ks that is provided by the first chip 140.

The second chip 1400 is adapted to create a second message denoted MS based upon data originating from the first reader 12.

The second message is generated by inserting, besides initial data, such as the allocated UID, preferably data for verifying an integrity of the initial data comprised within the second message, and also preferably a random number.

The insertion of a result of an initial data integrity algorithm allows to be ascertained that the concerned data has not been modified after a storage or a transmission of the data.

The insertion of a random number allows assuring an anonymity of the concerned card user with respect to any potential external not-authorized device (which does not know the key Ks) that may spy an exchange of data between the card 14 and the second reader 16. As a matter of fact, for each data exchange, as further explained below in relation with figure 2, between the card 14 and the first and second reader 12 and 16, a new random number is generated. In other words, for one and the same card 14 (and therefore one and the same card user), for two different moving between the first and second readers 12 and 16, the card 14 is identified with different data while the card 14 remains unique. The data sent by the card 14 appears with respect to any spying not-authorized device as a random number protecting thus the card user privacy.

The second message MS includes preferably encrypted data.

The encrypted data is, for example, a result of the formula that follows:
MS = encrypt (Ks) [UID + UID integrity result + Random];
where:
- the word "encrypt" means that data between brackets "[" and "]" is encrypted while using the concerned data and the key Ks indicated in parentheses "(" and ")", as entries into a predetermined encryption algorithm;
- the sign "+" between two data is a concatenation operator that means that the two concerned data are concatenated;
- the expression "UID integrity result" means that the UID is used as entry into a predetermined data integrity algorithm and a corresponding result is considered; and
- the word "Random" means that a random number generated by a predetermined random generation algorithm is considered.

The second chip 1400 stores preferably, at least in a temporary manner, the possible intermediary results, namely the UID integrity result, the Random, the encrypted data and a corresponding second message including the encrypted data.

As to data to be encrypted, the data brings together data, such as data sent from the first reader 12, like the UID, possibly other application data stored within the second chip memory 1410, like a parameter(s) of a user profile, completed by a result of the data integrity algorithm with the concerned data, and padded with a random number.

In other words, the data to be encrypted is a concatenation of data.

The corresponding result, as encrypted data, is also a concatenation of data. Such encrypted data allows protecting an access to the data.

The second chip 1400 is arranged to send, through the second range radio-frequency link 15, to the second reader 16 the thus generated second message.

The second chip 1400 may be further adapted to send, through the wire 147, to the first chip 140, data depending on a data exchange between the second chip 1400 and the second reader 16.

The data exchange between the second chip 1400 and the second reader 16 may be a result of a transaction that occurs between the second chip 1400 and the second reader 16.

The second reader 16 is preferably powered either while being connected to an external electrical network or with a battery, as an internal component.

The second reader 16 is preferably connected possibly through a communication network, such as an Intranet or Internet network, to a PC (not represented) or a server, as a controller of the first reader 12 and the second reader 16.

The second reader 16 includes at least one microprocessor 162, as data processing means, at least one memory 164, and at least one I/O interface 166 which are internally linked together through a data and control bus 163.

The second reader 16 includes or is connected to an antenna 168. The antenna 168 is configured, so as to exchange (at least receive), through the second range radiofrequency link 15, with an external entity, namely the card 14, data transported by a second range radiofrequency signal.

The second reader 16, like the first reader 12, is connected possibly through a communication network, such as an Intranet or Internet network, to a PC (not represented) and/or a server, as a controller of the second reader 16.

The second reader 16 is preferably able to power and interrogate the card 14 by sending a second range radiofrequency signal.

The second reader 16 includes preferably a modulator-demodulator (or modem), i.e. means that may:
- modulate an analogical carrier signal to encode digital information to be transmitted, over the antenna 168, to the card 14, and
- demodulate a received analogical carrier signal to decode the encoded digital information that is received, over the antenna 168, from the card 14.

The second reader 16 is preferentially arranged to read data stored within an external device, such as the card 14.

The second reader 16 is able to receive a message originating from the card 14.

The second reader 16 is able to carry out operations that are inverse with respect to operations carried out by the card 14, to retrieve data originating from the first reader 12.

The second reader 16 is preferably adapted to decrypt data received from the card 14, as external device.

To decrypt the encrypted data transported by a message originating from the card 14, the second reader 16 uses at least one key including the key Ks or a corresponding one that is derived or calculated from the key Ks.

The second reader 16 is preferably adapted to extract from resulting clear data the allocated UID and a corresponding UID integrity result to be checked and the random number sent by the card 14.

Once the second reader 16 has recognized that its interlocutory, as the card 14, has been assigned the extracted UID, the second reader 16 authorizes then a further processing. The further processing includes either a forwarding of the extracted UID to a server for managing an access to a service(s) or a processing by the second reader 16 to manage an access to a service(s).

The server may be remote, i.e. accessible through a communication network, like an Intranet or an Internet network.

The server is hosted by a computer and is dedicated to running an application(s) for managing an access to a service(s).

The server includes or is connected to a database including a plurality of user identifiers. The database associates each user identifier possibly with other data, like a corresponding key Ks, an identifier of the card 14, rights for accessing one or several services, and/or other data.

The server may be operated by a mobile radio-communication network operator or on its behalf, and/or a service provider or on its behalf. As service provider, it may be a company, as an advertising operator that provides advertising, a bank operator, a transport operator that manages a transport service, like a bus, a train, a plane, and/or a wallet service.

Figure 2 depicts an example of a message flow 20 that involves the first reader 12, the card 14 and the second reader 16.

Once the card 14 is sufficiently close to the first reader 12, the first reader 12 transmits, through the first communication channel, to the card 14 a first message 22 containing allocated data.

The data allocated by a PC (not represented) and/or a server (not represented) connected to the first reader 12 allows to track or locate and possibly orientate a card user, as a portable object carrier, before entering an area covered by the second reader 16.

The allocated data allows to anticipate an access control managed through the second reader 16.

The data contains preferably data relating to the UID and preferably data relating to an associated key Ks for encrypting data to be included within another message.

The card 14 inserts, within data to be forwarded to the second reader 16, preferably a result relating to the UID integrity algorithm and/or a random number that the card 14 has previously generated.

The random number ensures a privacy protection for the card user since one and the same card 14, for two different areas accesses, does not emit the same data.

The card 14 may insert further data, like a key for accessing a service, as user rights, stored within the card 14.

The card 14 encrypts preferably the data to be transmitted to the second reader 16.

The card user may have to move, so as to approach the second reader 16.

Once the card 14 is sufficiently close to the second reader 16, the second reader 16 may transmit, through the second communication channel, to the card 14 an interrogating signal (not represented) requesting to the card 14 to supply the second reader 16 with data, such as the allocated UID, any other identifier, like an Application IDentifier (or AID) sent from the first reader, and/or any other data, like application data, such as one or several parameters relating to a user profile, such as a gender of the card user, that is stored within the card 14.

The card 14 transmits, through the second communication channel, to the second reader 16, a second message 24 containing notably data allocated through or by the first reader 12, such as the UID and/or any other identifier, like an Application IDentifier (or AID) sent from the first reader, possibly completed by additional data, like application data, such as one or several parameters relating to a user profile stored within the card 14 (more exactly at least within the second chip 1400).

Such data is preferably encrypted.

The second reader 16 decrypts preferably the received data.

Data, like the UID and possibly a key for accessing a service, is thus retrieved, as clear data. Some clear data, like the allocated UID, originates from the first reader 12.

The clear data may contain further data, like application data, such as one or several parameters relating to a user profile stored within the card 14 and/or a key for accessing a service, as user rights.

The second reader 16 extracts the allocated data, like the UID and/or any other identifier, an UID integrity result and possibly other data, like application data, such as one or several parameters relating to a user profile stored within the card 14and/or user rights.

The second reader 16 analyses whether the extracted UID integrity result does or does not match an expected UID integrity result while putting the extracted UID, as entry into a data integrity algorithm.

If the expected UID integrity result does not match the extracted UID integrity result, the second reader 16 knows that the received extracted UID has been modified. In such a latter case, the second reader 16 does not authorize to access a service that is managed by either the second reader 16 or through the second reader 16.

Otherwise, i.e. if the expected UID integrity result matches the extracted UID integrity result, then the second reader 16 knows that the received extracted UID has not been modified. The second reader 16 authorizes to access a service that is managed by either the second reader 16 or another entity but through the second reader 16.

The second reader 16 transmits to the other entity, like a PC (not represented) and/or a server (not represented) connected to the second reader 16, clear data extracted from the received data.

An access to one service(s), i.e. a triggering of an execution of an application(s) by either the second reader 16 or another entity connected to the second reader 16, is automatically launched if the data received, such as the allocated UID, possibly satisfies one or several predefined conditions, notably the UID integrity result and/or the presence of user rights.

The processing of clear data received through or by the second reader 16 allows identifying a card user and accessing a service.

The card user does not need to be involved to access the concerned service. The invention system is therefore user friendly.

It is to be noted that the service may relate to any kind of service.

The card 14 may be a smart passport that is tapped onto a first reader 12 for retrieving a UID and/or an associated user rights to be used for passing a second reader 16, in particular in an airport hall for managing a passenger flow, in a hall for a detection of people for accessing different areas, like lounges...

## Claims

1. A system (10) for accessing a service,
**characterized in that** the system comprises two contact-less readers and one portable device (14);
**in that** a first contact-less reader (12) is adapted to send, through a first range radiofrequency link (13), to the portable device, a first message (22) comprising data;
and **in that** the portable device is adapted to send, through a second range radiofrequency link (15), to a second contact-less reader (16) a second message (24) using data received from the first message.

2. System according to claim 1, wherein the data comprises a user identifier and/or a key for encrypting data to be included within the second message.

3. System according to claim 1 or 2, wherein the portable device comprises two chips, a first chip (140) being able to communicate through the first range radiofrequency link, a second chip (1400) being able to communicate through the second range radiofrequency link.

4. System according to claim 3, wherein the first and second chips are connected, through at least one wire (147), to each other.

5. System according to any of claims 1 to 4, wherein the first range radiofrequency link comprises an International Organization for Standardization 14 443 link and the second range radiofrequency link comprises an Ultra High Frequency RadioFrequency IDentification link.

6. System according to any of claims 1 to 5, wherein the portable device comprises means (148, 1410) for inserting, within the second message, data for verifying an integrity of data comprised within the second message.

7. System according to any of claims 1 to 6, wherein the portable device comprises means (148, 1410) for inserting, within the second message, a random number.

8. System according to any of claims 1 to 7, wherein the portable device comprises means (148, 1410) for encrypting data to be included within the second message.

9. A portable device (14) for accessing a service,
**characterized in that** the portable device is adapted to:
- receive, through a first range radiofrequency link (13), a first message (22) comprising data; and
- send, through a second range radiofrequency link (15), a second message (24) using data received from the first message.

10. A method (20) for accessing a service,
**characterized in that** the method comprises the following steps:
- a first contact-less reader (12) sends, through a first range radiofrequency link (13), to a portable device (14), a first message (22) comprising data; and
- the portable device sends, through a second range radiofrequency link (15), to a second contact-less reader (16) a second message (24) using data received from the first message.
